Europäisches Patentamt

European Patent Office

Office européen des brevets

(11) Veröffentlichungsnummer: **0 189 369**
A1

# (12) EUROPÄISCHE PATENTANMELDUNG

(21) Anmeldenummer: 86730004.8

(22) Anmeldetag: 10.01.86

(51) Int. Cl.⁴: **H04L 5/14** , H04Q 9/14

(30) Priorität: 21.01.85 DE 3502309

(43) Veröffentlichungstag der Anmeldung:
30.07.86 Patentblatt 86/31

(84) Benannte Vertragsstaaten:
DE FR GB NL

(71) Anmelder: **Siemens Aktiengesellschaft**
**Berlin und München Wittelsbacherplatz 2**
**D-8000 München 2(DE)**

(72) Erfinder: **Lesche, Wolfgang, Dipl.-Ing.**
**Wildbergweg 13**
**D-1000 Berlin 37(DE)**

(54) Datenübertragungssystem.

(57) Ein Datenübertragungssystem dient zur Übertragung von Informationssignalen auf einer Zweidrahtleitung (2) zwischen einer Zentralstation (1) mit einer Empfangseinrichtung (11) und einer in Reihe mit einer Spannungsquelle (13) an der Zweidrahtleitung (2) liegenden steuerbaren Schalteinrichtung (8) und mehreren Unterstationen (3), in denen jeweils eine Empfangseinheit (24) parallel zu einer steuerbaren Schalteinheit (27) an der Zeidrahtleitung (2) liegt.

Um eine besonders zuverlässige und verlustleistungsarme Übertragung von Informationssignalen zu erzielen, liegt in der Zentralstation (1) in Reihe mit der Empfangseinrichtung (11) und parallel zu der Schalteinrichtung (8) und der Spannungsquelle (13) eine weitere Spannungsquelle (16), die bezüglich ihrer Polarität entgegengesetzt zu der Spannungsquelle (13) liegt. In jeder Unterstation (3) ist in Reihe mit der Empfangseinheit (24) ein Diodenelement (30) angeordnet. Bei einer alternativen Lösung ist die weitere Spannungsquelle - (53) in jeder Unterstation (3) jeweils in Reihe mit der steuerbaren Schalteinheit (27) angeordnet.

FIG. 1

EP 0 189 369 A1

Datenübertragungssystem

Die Erfindung betrifft ein Datenübertragungssystem zur Übertragung von Informationssignalen auf einer Zweidrahtleitung zwischen einer Zentralstation und mehreren parallel zueinander an der Zweidrahtleitung angeschlossenen Unterstationen, bei dem die Zentralstation eine stromempfindliche Empfangseinrichtung enthält und als Sendeeinrichtung eine steuerbare Schalteinrichtung aufweist, die in Reihe mit einer Spannungsquelle an der Zweidrahtleitung angeschlossen ist, und bei dem jede Unterstation jeweils eine steuerbare Schalteinheit als Sendeeinheit sowie eine Empfangseinheit aufweist, die eingangsseitig parallel zu der Schalteinheit liegt und gemeinsam mit dieser an der Zweidrahtleitung angeschlossen ist.

Bei einem derartigen, aus der DE-OS 33 29 049 bekannten Datenübertragungssystem ist eine Zentralstation über eine Zweidrahtleitung mit mehreren Unterstationen verbunden. Die Zentralstation enthält eine Spannungsquelle, die in Reihenschaltung mit einem stromempfindlichen Eingang einer Empfangseinrichtung und einer als Sendeeinrichtung arbeitenden steuerbaren Schalteinrichtung an der Zweidrahtleitung liegt; parallel zu der steuerbaren Schalteinrichtung liegt eine Zenerdiode. Jede Unterstation enthält jeweils eine als Sendeeinheit arbeitende steuerbare Schalteinheit, die an der Zweidrahtleitung angeschlossen ist; weiterhin weist jede Unterstation jeweils eine Empfangseinheit mit einem spannungsempfindlichen Eingang auf, der ebenfalls an der Zweidrahtleitung liegt.

Die Datenübertragung zwischen der Zentralstation und den Unterstationen erfolgt im Halbduplexbetrieb, wobei zur Übertragung von Informationssignalen von der Zentralstation zu den Unterstationen die Spannung auf der Zweidrahtleitung durch die steuerbare Schalteinrichtung moduliert wird und die modulierte Spannung von den spannungsempfindlichen Empfangseinheiten der Unterstationen erfaßt wird. Zur Übertragung von Informationssignalen von einer der Unterstationen zu der Zentralstation wird der Strom auf der Zweidrahtleitung durch die steuerbare Schalteinheit der betreffenden Unterstation moduliert und der modulierte Strom wird in der Zentralstation von der stromempfindlichen Empfangseinrichtung detektiert.

Der Erfindung liegt die Aufgabe zugrunde, ein Datenübertragungssystem anzugeben, das eine besonders zuverlässige und verlustleistungsarme Übertragung von Informationssignalen auf einer Zweidrahtleitung zwischen einer Zentralstation und mehreren parallel an der Zweidrahtleitung liegenden Unterstationen ermöglicht.

Zur Lösung dieser Aufgabe liegt erfindungsgemäß bei dem Datenübertragungssystem der eingangs beschriebenen Art in der Zentralstation in Reihe mit der Empfangseinrichtung und in einem Parallelzweig zu der steuerbaren Schalteinrichtung und der Spannungsquelle eine weitere Spannungsquelle an der Zweidrahtleitung, wobei die weitere Spannungsquelle in dem Parallelzweig bezüglich ihrer Polarität entgegengesetzt zu der einen Spannungsquelle liegt; weiterhin ist in jeder Unterstation die jeweilige Empfangseinheit eingangsseitig an der Zweidrahtleitung über ein Diodenelement angeschlossen, dessen Anodenanschluß über die Zweidrahtleitung mit dem positiven Spannungsanschluß der einen Spannungsquelle in Verbindung steht.

Ein wesentlicher Vorteil des erfingunsgemäßen Datenübertragungssystem besteht in der Anordnung der weiteren Spannungsquelle in der Zentralstation, wodurch in vorteilhafter Weise nicht nur die Übertragung von Informationssignalen von einer Unterstation zu der Zentralstation, sondern auch die Übertragung von Informationssignalen in umgekehrter Richtung von der Zentralstation zu den Unterstationen durch Modulation des Stromes auf der Zweidrahtleitung ermöglicht ist. Hierdurch wird gegenüber dem bekannten Datenübertragungssystem, bei dem die Informationsübertragung von der Zentralstation zu den Unterstationen durch Modulation der Spannung auf der Zweidrahtleitung erfolgt, eine besonders hohe Übertragungssicherheit erzielt, weil der modulierte Strom im Unterschied zu der Spannung auf der Zweidrahtleitung nicht durch einen Spannungsabfall entlang der Zweidrahtleitung beeinflußt wird.

Zur Erhöhung der Übertragungssicherheit trägt weiterhin bei, daß je nach Richtung der Datenübertragung entweder von der Zentralstation zu den Unterstationen oder von einer Unterstation zu der Zentralstation entweder die eine Spannungsquelle oder die weitere Spannungsquelle über die Schalteinrichtung in der Zentralstation bzw. über die Schalteinheit der betreffenden Unterstation an die Zweidrahtleitung geschaltet wird, so daß auch die Flußrichtungen der jeweiligen modulierten Ströme auf der Zweidrahtleitung entsprechend der Richtung der Datenübertragung entgegengesetzt sind. Dadurch kann in den Unterstationen auf besonders einfache und sichere Weise zwischen Sendedaten von der Zentralstation und Sendedaten von anderen Unterstationen unterschieden werden. Bei dem erfindungsgemäßen Datenübertragungssystem erfolgt diese Unterscheidung durch das Diodenelement der jeweiligen Unterstation, das nur den von der Schalteinrichtung der Zentralstation modulierten Strom in die Empfangseinheit fließen läßt.

Ein weiterer Vorteil des erfindungsgemäßen Datenübertragungssystems besteht in seiner geringen Verlustleistungsaufnahme. Während nämlich bei dem bekannten Datenübertragungssystem die einzige Spannungsquelle einen Strom ständig in die Zweidrahtleitung einspeist, und zwar unabhängig davon, ob oder in welcher Richtung eine Datenübertragung stattfindet, wird bei dem erfindungsgemäßen Datenübertragungssystem nur während der Dauer der Informationsübertragung entweder die eine Spannungsquelle oder die weitere Spannungsquelle über die steuerbare Schalteinrichtung in der Zentralstation bzw. über die steuerbare Schalteinheit in einer der Unterstationen mit den Empfangseinheiten in den Unterstationen bzw. mit der Empfangseinrichtung in der Zentralstation verbunden. Dabei wird durch das in Reihe mit der Empfangseinheit der Unterstation liegende Diodenelement ein ständiger Stromfluß aus der weiteren Spannungsquelle über die Zweidrahtleitung in den Eingang der Empfangseinheit verhindert, so daß die Verlustleistungsaufnahme des erfindungsgemäßen Datenübertragungssystems sehr gering ist. Da in jeder Unterstation das jeweilige Diodenelement bewirkt, daß nur der von der Schalteinrichtung in der Zentralstation modulierte Strom in die Empfangseinheit der Unterstation fließen kann, während das Diodenelement für den von der Schalteinheit einer Unterstation modulierten Strom sperrend ist, wird im Sendebetrieb einer der Unterstationen die weitere Spannungsquelle im wesentlichen nur durch die Empfangseinrichtung in der Zentralstation belastet. Daher ist auch die von der weiteren Spannungsquelle abgegebene Leistung sowie die Schaltbelastung der steuerbaren Schalteinheit in der betreffenden Unterstation entsprechend gering.

Beim Sendebetrieb der Zentralstation, also bei Ansteuerung der Schalteinrichtung wird in vorteilhafter Weise ein Kurzschluß zwischen der einen Spannungsquelle und der weiteren Spannungsquelle dadurch verhindert, daß in dem Parallelzweig in Reihe mit der weiteren Spannungsquelle eine Strombegrenzungseinrichtung angeordnet ist. Bei einer besonders einfachen Ausführungsform des erfindungsgemäßen Datenbertragungssystems besteht die Strombegrenzungseinrichtung aus einem Widerstand. Durch den Widerstand wird auf einfache Weise beim Senden der Zentralstation der zusätzlich aus der Spannungsquelle in die weitere Spannungsquelle fließende Strom begrenzt, so daß auch die hierdurch entstehende zusätzliche Verlustleistungsaufnahme gering ist.

Eine minimale Verlustleistungsaufnahme des erfindungsgemäßen Datenübertragungssystems wird dadurch erreicht, daß die Strombegrenzungseinrichtung aus einem steuerbaren Schaltglied besteht, dessen Steuereingang im Gegentakt zu der steuerbaren Schalteinrichtung steuerbar ist. Dadurch wird in vorteilhafter Weise beim Senden der Zentralstation, also bei Ansteuerung der Schalteinrichtung in einen stromleitenden Zustand das Schaltglied in einen stromsperrenden Zustand gesteuert, so daß kein zusätzlicher Stromfluß von der einen Spannungsquelle zu der weiteren Spannungsquelle stattfindet und daher auch keine zusätzlichen Verlustleistungen auftreten können.

Bei dem erfindungsgemäßen Datenübertragungssystem kann die Empfangseinrichtung in der Zentralstation wahlweise in dem Parallelzweig zu der steuerbaren Schalteinrichtung und der Spannungsquelle oder in Reihe mit der steuerbaren Schalteinrichtung angeordnet sein. Da die Ströme auf der Zweidrahtleitung je nach Richtung der Datenübertragung eine entgegengesetzte Flußrichtung aufweisen, läßt sich für den Fall, daß die Empfangseinrichtung in Reihe mit der steuerbaren Schalteinrichtung an der Zweidrahtleitung liegt, eine Entkopplung der Empfangseinrichtung von der Schalteinrichtung besonders einfach dadurch erreichen, daß parallel zu der Empfangseinrichtung eine Diode liegt, deren Anodenanschluß mit dem positiven Spannungsanschluß der einen Spannungsquelle in Verbindung steht. Hierdurch wird vermieden, daß die von der steuerbaren Schalteinrichtung der Zentralstation ausgesandten Informationssignale von der Empfangseinrichtung der Zentralstation empfangen werden können.

Alternativ zu dem obenstehend beschriebenen erfindungsgemäßen Datenübertragungssystem wird eine weitere Lösung der angegebenen Aufgabe dadurch erreicht, daß erfindungsgemäß bei dem eingangs beschriebenen Datenübertragungssystem in der Zentralstation die Empfangseinrichtung eingangsseitig in Reihe mit einem Diodenelement in einem Parallelzweig zu der steuerbaren Schalteinrichtung und der Spannungsquelle an der Zweidrahtleitung liegt, daß der Anodenanschluß des Diodenelements mit dem negativen Spannungsanschluß der Spannungsquelle in Verbindung steht, daß in jeder Unterstation in Reihe mit der jeweiligen steuerbaren Schalteinheit jeweils eine weitere Spannungsquelle derart an der Zweidrahtleitung liegt, daß jeweils verschiedenpolige Spannungsanschlüsse der einen Spannungsquelle und der jeweiligen weiteren Spannungsquelle über die Zweidrahtleitung miteinander in Verbindung stehen, und daß in jeder Unterstation die jeweilige Empfangseinheit eingangsseitig an der Zweidrahtleitung über ein weiteres Diodenelement angeschlossen ist, dessen Anodenanschluß über die Zweidrahtleitung mit dem positiven Spannungsanschluß der einen Spannungsquelle in der Zentralstation in Verbindung steht.

Auch bei dieser Lösungsvariante des erfindungsgemäßen Datenübertragungssystems wird durch die jeweilige weitere Spannungsquelle in jeder Unterstation die Übertragung von Informationssignalen sowohl von der Zentralstation zu allen Unterstationen als auch von jeweils einer Unterstation zu der Zentralstation durch Modulation des Stromes auf der Zweidrahtleitung ermöglicht, so daß eine hohe Übertragungssicherheit gewährleistet ist. Innerhalb der Zentralstation und der Unterstationen wird durch das Diodenelement bzw. durch das weitere Diodenelement in der jeweiligen Unterstation auf besonders einfache Weise eine Entkopplung der Empfangseinrichtung bzw. Empfangseinheit von der zugehörigen Sendeeinrichtung bzw. Sendeeinheit erreicht, so daß in der Zentralstation nur die von den Unterstationen ausgesandten Informationssignale und in den Unterstationen nur die von der Zentralstation ausgesandten Informationssignale empfangen werden.

Dadurch, daß je nach Richtung der Datenübertragung entweder von der Zentralstation zu den Unterstationen oder von einer Unterstation zu der Zentralstation entweder die eine Spannungsquelle in der Zentralstation oder die weitere Spannungsquelle in der betreffenden Unterstation über die Schalteinrichtung bzw. die jeweilige Schalteinheit an die Zweidrahtleitung geschaltet wird, fließt in vorteilhafter Weise nur jeweils während der Dauer einer Informationsübertragung auf der Zweidrahtleitung ein Strom, so daß die Verlustleistungsaufnahme des erfindungsgemäßen Datenübertragungssystems besonders gering ist.

Bei den verschiedenen angegebenen Lösungsvarianten des erfindungsgemäßen Datenübertragungssystems können in an sich bekannter Weise Optokoppler in der steuerbaren Schalteinrichtung und Empfangseinrichtung in der Zentralstation bzw. in den steuerbaren Schalteinheiten und Empfangseinheiten der jeweiligen Unterstationen Verwendung finden. Da die Übertragung von Informationssignalen von der Zentralstation zu den Unterstationen und umgekehrt bei dem erfindungsgemäßen Datenübertragungssystem durch Modulation eines Stromes auf der Zweidrahtleitung erfolgt, läßt sich in vorteilhafter Weise ein besonders einfacher Aufbau der Empfangseinrichtung in der Zentralstation und der Empfangseinheit in der jeweiligen Unterstation dadurch erreichten, daß die Anschlüsse der Leuchtdiode des jeweiligen Optokopplers den Eingang der Empfangseinrichtung bzw. Empfangseinheit bilden.

Bei einer besonders vorteilhaften Weiterbildung des erfindungsgemäßen Datenübertragungssystems enthält die Empfangseinrichtung in der Zentralstation ein Abtast-Halte--Glied und eine Subtrahierschaltung, die mit einem nichtinvertierenden Eingang über das Abtast-Halte-Glied und mit einem invertierenden Eingang direkt an dem Eingang der Empfangseinrichtung angeschlossen ist. Dadurch läßt sich auch bei einem möglichen Kurzschluß in der steuerbaren Schalteinheit einer oder mehrerer Unterstationen die Funktion des erfindungsgemäßen Datenübertragungssystems weitgehend aufrechterhalten. Ein Kurzschluß in der steuerbaren Schalteinheit hat nämlich einen permanenten Gleichstrom auf der Zweidrahtleitung zur Folge, der beim Senden einer intakten Unterstation einem den zu übertragenden Informationssignalen entsprechenden Modulationsstrom überlagert ist. In der Sendepause der Unterstationen kann der Wert des Gleichstromes auf der Zweidrahtleitung in dem Abtast-Halte-Glied gespeichert werden, so daß in der Subtrahierschaltung beim Senden einer Unterstation dieser Gleichstromwert von dem am Eingang der Empfangseinrichtung liegenden Summenstrom aus dem Gleichstrom und dem Modulationsstrom subtrahiert wird und an dem Ausgang der Subtrahierschaltung die übertragenen Informationssignale unbeeinträchtigt zur Verfügung stehen. In dem beschriebenen Fehlerfall kann zur Abtrennung des Modulationsstromes von dem Gleichstrom die Empfangseinrichtung an ihrem Eingang auch einen Tiefpaß oder einen Übertrager aufweisen, jedoch ist eine derartige dynamische Auskopplung der Informationssignale vergleichsweise störungsempfindlich.

Die Stromversorgung der Unterstationen kann in einfacher Weise dadurch erfolgen, daß in jeder Unterstation an der Zweidrahtleitung eine Reihenschaltung aus einem elektrischen Ventilelement und einem Ladekondensator angeschlossen ist und daß die jeweilige Unterstation mit ihren Stromversorgungsanschlüssen parallel an dem Ladekondensator liegt. Das elektrische Ventilelement entkoppelt den Ladekondensator von der Zweidrahtleitung, sobald die Spannung auf der Zweidrahtleitung unter den Wert der Spannung an dem Ladekondensator absinkt.

Zur Erläuterung der Erfindung zeigt

Figur 1 in einem Prinzipschaltbild ein erstes Ausführungsbeispiel des erfindungsgemäßen Datenübertragungssystems und

Figur 2 eine gegenüber dem in Figur 1 dargestellten Ausführungsbeispiel modifizierte Ausführungsform des erfindungsgemäßen Datenübertragungssystems; in

Figur 3 ist in einem Prinzipschaltbild ein weiteres Ausführungsbeispiel des erfindungsgemäßen Datenübertragungssystems dargestellt und

Figur 4 zeigt das Ausführungsbeispiel nach Figur 3 mit Verwendung von Optokopplern sowie mit einer Stromversorgungseinrichtung für die Zentralstation und die Unterstationen.

Figur 5 zeigt schließlich eine besonders vorteilhafte Ausführung der Empfangseinrichtung der Zentralstation des erfindungsgemäßen Datenübertragungssystems.

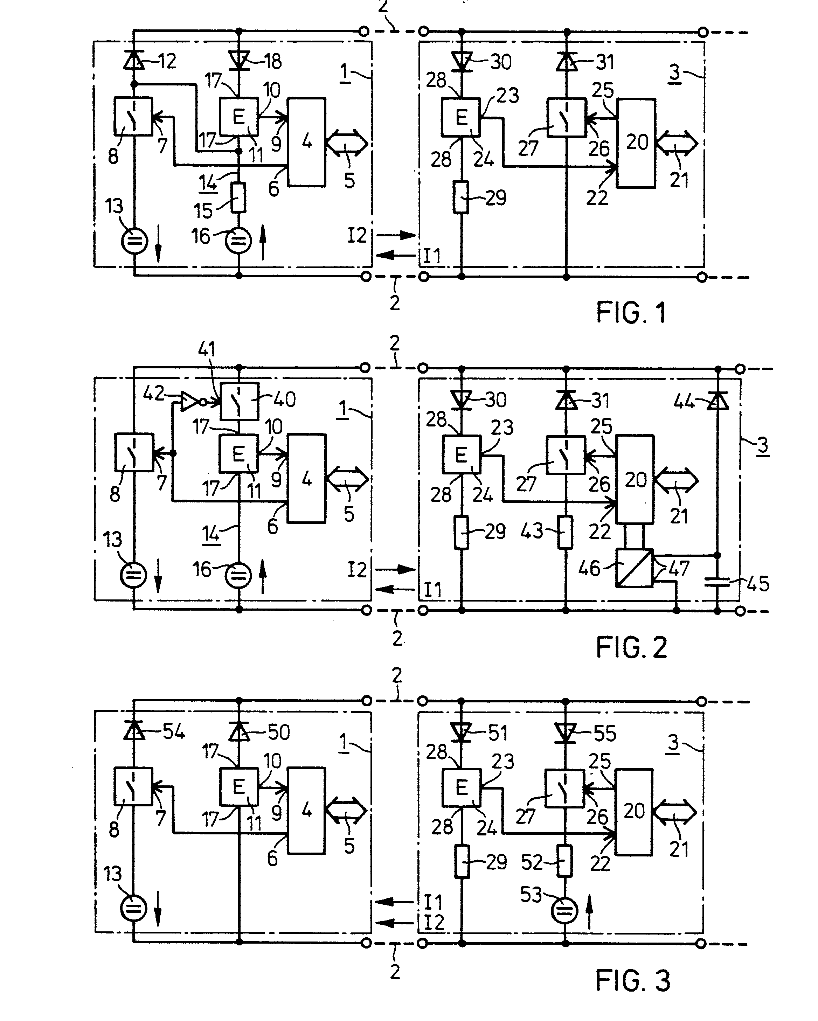

Die prinzipielle Darstellung des erfindungsgemäßen Datenübertragungssystems nach Figur 1 zeigt eine Zentralstation 1, die über eine Zweidrahtleitung 2 mit mehreren jeweils parallel an der Zweidrahtleitung 2 liegenden Unterstationen verbunden ist, von denen hier nur eine einzige Unterstation 3 dargestellt ist.

Die Zentralstation enthält eine Sende/Empfangs-Steuereinrichtung 4, die über einen bidirektionalen Datenbus 5 mit einer hier nicht gezeigten Aufbereitungseinrichtung (beispielsweise einem Rechner) für die von der Zentralstation 1 zu sendenden oder zu empfangenden Informationssignale in Verbindung steht. Die Sende/Empfangs-Steuereinrichtung 4 weist einen Steuerausgang 6 auf, der mit einem Steuereingang 7 einer Sendeeinrichtung 8 verbunden ist; die Sende/Empfangs-Steuereinrichtung 4 ist weiterhin über einen Steuereingang 9 mit dem Ausgang 10 einer Empfangseinrichtung 11 verbunden. Die Sendeeinrichtung 8 besteht aus einer steuerbaren Schalteinrichtung, die über eine Diode 12 in Reihe mit einer Spannungsquelle 13 an der Zweidrahtleitung 2 angeschlossen ist; dabei steht der Anodenanschluß der Diode 12 mit dem positiven Spannungsanschluß der Spannungsquelle 13 in Verbindung. In einem Parallelzweig 14 zu der steuerbaren Schalteinrichtung 8 und der Spannungsquelle 13 ist in Reihe mit einer aus einem Widerstand bestehenden Strombegrenzungseinrichtung eine weitere Spannungsquelle 16 derart angeordnet, daß sie bezüglich ihrer Polarität antiparallel zu der einen Spannungsquelle 13 liegt. Die Empfangseinrichtung 11 ist mit einem stromempfindlichen Eingang 17 in Reihe mit der weiteren Spannungsquelle 16 und der Strombegrenzungseinrichtung 15 an der Zweidrahtleitung 2 angeschlossen, wobei die Diode 12 parallel zu dem Eingang 17 der Empfangseinrichtung 11 liegt. Eine weitere Diode 18, die in Reihe mit dem Eingang 17 der Empfangseinrichtung 11 antiparallel zu der Diode 12 angeordnet ist, dient lediglich Schutzzwecken und kann auch entfallen.

Die dargestellte Unterstation 3 enthält ebenso wie die übrigen hier nicht dargestellten Unterstationen eine Sende/Empfangs-Steuereinheit 20, die über einen bidirektionalen Datenbus 21 mit einer hier nicht gezeigten Aufbereitungseinrichtung für die von der Unterstation 3 zu sendenden oder zu empfangenden Informationssignale verbunden ist. Die Sende/Empfangs-Steuereinheit 20 weist einen Steuereingang 22 auf, der mit dem Ausgang 23 einer Empfangseinheit 24 verbunden ist; die Sende/Empfangs-Steuereinheit 20 ist weiterhin mit einem Steuerausgang 25 an einem Steuereingang 26 einer Sendeeinheit 27 angeschlossen. Die Empfangseinheit 24 weist einen stromempfindlichen Eingang 28 auf und ist mit diesem in Reihe mit einem Strombegrenzungswiderstand 29 und einem Diodenelement 30 an der Zweidrahtleitung angeschlossen. Dabei ist das Diodenelement 30 derart angeordnet, daß es mit seinem Anodenanschluß über die Zweidrahtleitung mit dem positiven Spannungsanschluß der Spannungsquelle 13 in Verbindung steht. Die Sendeeinheit 27 besteht aus einer steuerbaren Schalteinheit und ist über ein weiteres Diodenelement 31 parallel an der Zweidrahtleitung 2 angeschlossen. Das weitere Diodenelement 31 wirkt als Schutzelement und kann, da es für die Funktion des erfindungsgemäßen Datenübertragungssystems nicht erforderlich ist, entfallen.

Die Übertragung von Informationssignalen erfolgt bei dem in Figur 1 dargestellten Ausführungsbeispiel des erfindungsgemäßen Datenübertragungssystems im Halbduplexverfahren, wobei abwechselnd die Zentralstation 1 über die Zweidrahtleitung 2 Informationssignale an die Unterstationen sendet und eine der Unterstationen, z. B. die dargestellte Unterstation 3, Informationssignale an die Zentralstation 1 sendet. Dabei wird der Sende- und Empfangsbetrieb der Zentralstation 1 durch die Sende/Empfangs-Steuereinrichtung 4 koordiniert, während in den Unterstationen die dortigen Sende/Empfangs-Steuereinheiten, z. B. 20, dienen. Im Sendebetrieb der Zentralstation 1 werden die zu sendenden Daten der Sende/Empfangs-Steuereinrichtung 4 über den Datenbus 5 zugeführt und in ein Modulationssignal, z. B. nach dem Verfahren der Pulsbreitenmodulation umgesetzt. Mit diesem Modulationssignal an dem Steuerausgang 6 der Sende/Empfangs-Steuereinrichtung 4 wird die steuerbare Schalteinrichtung 8 über ihren Steuereingang 7 angesteuert und schaltet im Takt des ihr zugeführten Modulationssignals die Spannungsquelle 13 an die Zweidrahtleitung 2. Die Strombegrenzungseinrichtung 15 in Form eines Widerstandes verhindert dabei einen unerwünschten Kurzschluß zwischen der Spannungsquelle 13 und der weiteren Spannungsquelle 16. Entsprechend dem Takt, in dem die Spannungsquelle 13 an die Zweidrahtleitung 2 geschaltet wird, fließt auf der Zweidrahtleitung 2 ein modulierter Strom I1, von dem in jeder Unterstation, z. B. 3, jeweils ein Teilstrom über das Diodenelement 30, die Empfangseinheit 24 und den Strombegrenzungswiderstand 29 in die Spannungsquelle 13 zurück abgezweigt wird. Das Diodenelement 30 verhindert dabei einen Stromfluß aus der weiteren Spannungsquelle 16 über die Zweidrahtleitung 2 in die Empfangseinheit 24. Die Empfangseinheit 24 erzeugt an ihrem Ausgang 23 aus dem in ihren Eingang 28 fließenden modulierten Teilstrom ein entsprechendes Ausgangssignal, das der Sende/Empfangs-Steuereinheit 20 über ihren Steuereingang 22 zugeführt wird und dort zur weiteren Auswertung über den Datenbus 21 an die nicht dargestellte Aufbereitungseinheit weitergeleitet wird. Im Falle eines Kurzschlußdefektes der steuerbaren Schalteinheit 27 verhindert das weitere Diodenelement 28 einen Kurzschluß der Zweidrahtleitung 2, so daß durch den Kurzschlußdefekt keine Beeinträchtigung der Datenübertragung vond er Zentralstation 1 zu den Unterstationen, z. B. 3, eintritt.

Zur Übertragung von Informationssignalen von einer der Unterstationen, wie z. B. der Unterstation 3, zu der Zentralstation 1 werden die zu sendenden Daten ebenso wie für die Zentralstation 1 beschrieben über den Datenbus 21 der Sende/Empfangs-Steuereinheit 20 zugeführt, die an ihrem Steuerausgang 25 ein entsprechendes für die Übertragung geeignetes Modulationssignal erzeugt. Die mit diesem Modulationssignal angesteuerte steuerbare Schalteinheit 27 schließt die Zweidrahtleitung 2 in dem Takt des ihr zugeführten Modulationssignales kurz. Solange eine Unterstation sendet, befindet sich die steuerbare Schalteinrichtung 8 der Zentralstation 1 in einem stromsperrenden Zustand und aus der weiteren Spannungsquelle 16 fließt ein Strom I2 über die Zweidrahtleitung 2 und die steuerbare Schalteinheit 27 durch die Empfangseinrichtung 11. Der Strom I2 ist entsprechend der Ansteuerung der steuerbaren Schalteinrichtung 27 moduliert und seine Amplitude ist durch den Widerstand der Strombegrenzungseinrichtung 15 festgelegt. Die Empfangseinrichtung 11 der Zentralstation 1 erzeugt an ihrem Ausgang 10 aus dem modulierten Strom ein entsprechendes Ausgangssignal, das von der Sende/Empfangs-Steuereinrichtung 4 über den Datenbus 5 zur Auswertung der nicht dargestellten Auswerteeinrichtung zugeführt wird.

Das in Figur 2 dargestellte Ausführungsbeispiel des erfindungsgemäßen Datenübertragungssystems ist gegenüber der in Figur 1 gezeigten Ausführungsform geringfügig modifiziert, weshalb einander entsprechende Bauelemente mit gleichen Bezugszeichen versehen sind. Figur 2 zeigt wiederum eine Zentralstation 1, die über eine Zweidrahtleitung 2 mit mehreren jeweils parallel an der Zweidrahtleitung 2 liegenden Unterstationen verbunden ist, von denen hier nur wiederum eine einzige Unterstation 3 dargestellt ist. Die Zentralstation 1 enthält eine Sende/Empfangs-Steuereinrichtung 4, die über einen bidirektionalen Datenbus mit einer nicht gezeigten Aufbereitungseinrichtung für die zu sendenden oder zu empfangenden Daten verbunden ist. Die Sende/Empfangs--Steuereinrichtung 4 ist weiterhin über einen Steuerausgang 6 mit einem Steuereingang 7 einer Sendeeinrichtung 8 verbunden und über einen Steuereingang 9 an dem Ausgang 10 einer Empfangseinrichtung 11 angeschlossen. Die Sendeeinrichtung 8 besteht aus einer steuerbaren Schalteinrichtung, die in Reihe mit einer Spannungsquelle 13 an der Zweidrahtleitung 2 angeschlossen ist. In einem Parallelzweig 14 zu der steuerbaren Schalteinrichtung 8 und der Spannungsquelle 13 liegen in Reihe eine weitere Spannungsquelle 16, die Empfangseinrichtung 11 mit ihrem strompfindlichen Eingang 17 und eine Strombegrenzungseinrichtung 40 an der Zweidrahtleitung. Die Strombegrenzungseinrichtung 40 besteht aus einem steuerbaren Schaltglied, dessen Steuereingang 41 über ein Invertierglied mit dem Steuereingang 7 der steuerbaren Schalteinrichtung 8 und dem Steuerausgang 6 der Sende/Empfangs--Steuereinrichtung 4 in Verbindung steht. Die weitere Spannungsquelle 16 ist derart angeordnet, daß sie antiparallel zu der Spannungsquelle 13 liegt. Die dargestellte Unterstation 3 enthält ebenso wie bei dem Ausführungsbeispiel nach Figur 1 eine Sende/Empfangs-Steuereinheit 20, deren Steuereingang 22 mit dem Ausgang einer Empfangseinheit 24 verbunden ist und deren Steuerausgang 25 an dem Steuereingang 26 einer Sendeeinheit 27 angeschlossen ist.

Die Empfangseinheit 24 weist einen stromempfindlichen Eingang 28 auf und ist mit diesem in Reihe mit einem Strombegrenzungswiderstand 29 und einem Diodenelement 30 an der Zweidrahtleitung 2 angeschlossen; der Anodenanschluß des Diodenelementes 30 steht über die Zweidrahtleitung 2 mit dem positiven Spannungsanschluß der Spannungsquelle 13 in Verbindung. Die Sendeeinheit 27 besteht aus einer steuerbaren Schalteinheit und ist über ein weiteres Diodenelement 28 und einen weiteren Strombegrenzungswiderstand 43 an der Zweidrahtleitung 2 angeschlossen. Die Unterstation 3 enthält zu ihrer Stromversorgung eine aus einem elektrischen Ventilelement 44 und einem Ladekondensator 45 bestehende Reihenschaltung, die an der Zweidrahtleitung 2 angeschlossen ist; ein galvanisch trennendes Netzteil 46 liegt mit seinen Eingangsanschlüssen 47 parallel zu dem Ladekondensator 45 und führt ausgangsseitig den Baueinheiten der Unterstation 3 den erforderlichen Versorgungsstrom zu.

Die Funktionsweise des in Figur 2 dargestellten Ausführungsbeispiels des erfindungsgemäßen Datenübertragungssystems ist prinzipiell die gleiche, wie bei dem Ausführungsbeispiel nach Figur 1. Während jedoch bei dem in Figur 1 dargestellten Datenübertragungssystem im Sendebetrieb der Zentralstation 1 bei stromleitendem Zustand der steuerbaren Schalteinrichtung 8 ein permanenter Gleichstrom von der Spannungsquelle 13 über die Strombegrenzungseinrichtung 15 in die weitere Stromquelle 16 fließt, wird bei dem in Figur 2 dargestellten Ausführungs--beispiel jedesmal dann, wenn die steuerbare Schalteinrichtung 8 in einen stromleitenden Zustand gesteuert wird, gleichzeitig das Schaltglied 40 in einen stromsperrenden Zustand gesteuert, so daß kein zusätzlicher Stromfluß von der einen Spannungs-quelle 13 zu der weiteren Spannungsquelle 16 stattfindet und daher auch keine zusätzlichen Verlustleistungen auftreten können.

In Figur 3 ist ein weiteres Ausführungsbeispiel des erfindungsgemäßen Datenübertragungssystems dargestellt, bei dem widerum eine Zentralstation 1 über eine Zweidrahtleitung 2 mit mehreren Unterstationen verbunden ist, von denen nur eine Unterstation 3 dargestellt ist. Die Zentralstation enthält eine Sende/Empfangs-Steuereinrichtung 4, die mit Datenbus 5 zur Weiterleitung von empfangenen oder zu sendenden Daten verbunden ist. Die Sende/Empfangs--Steuereinrichtung 4 ist über einen Steuerausgang 6 mit dem Steuereingang 7 einer aus einer steuerbaren Schalteinrichtung 8 bestehenden Sendeeinrichtung verbunden; ein Steuereingang 9 der Sende/Empfangs-Steuereinrichtung 4 ist an einem Ausgang 10 einer Empfangseinrichtung 11 angeschlossen. Die steuerbare Schalteinrichtung 8 liegt in Reihe mit Spannungsquelle 13 an den Zweidrahtleitung 2. Die Empfangseinrichtung 11 ist mit ihrem stromempfindlichen Eingang 17 in Reihe mit einem Diodenelement 50 in einem Parallelzweig 14 zu der steuerbaren Schalteinrichtung 8 und der Spannungsquelle 13 an der Zweidrahtleitung 2 angeschlossen. Der Anodenanschluß des Diodenelementes 50 steht dabei mit dem positiven Spannungsanschluß der Spannungsquelle 13 in Verbindung.

Die in Figur 3 dargestellte Unterstation 3 enthält ebenso wie bei den zuvor vorbeschriebenen Ausführungsbeispielen eine Sende/Empfangs-Steuereinheit 20, die über einen Datenbus 21 mit einer hier gezeigten Aufbereitungseinheit für die von der Unterstation zu sendenden oder empfangenden Informationssignale verbunden ist. Die Sende/Empfangs-Steuereinheit 20 ist weiterhin über einen Steuereingang 22 mit dem Ausgang 23 einer Empfangseinheit 24 verbunden und ist über einen Steuerausgang 25 an einem Steuereingang 26 einer aus einer steuerbaren Schalteinheit 27 bestehenden Sendeeinheit angeschlossen. Die Empfangseinheit 24 weist einen stromempfindlichen Eingang 28 auf und ist mit diesem in Reihe mit einem Strombegrenzungswiderstand 29 und einem weiteren Diodenelement 51 an der Zweidrahtleitung angeschlossen. Der Anodenanschluß des Diodenelementes 51 steht über die Zweidrahtleitung 2 mit dem positiven Spannungsanschluß der Spannungsquelle 13 in der Zentralstation 1 in Verbindung. Die steuerbare Schalteinheit 27 liegt über einen weiteren Strombegrenzungswiderstand 52 und eine weitere Spannungsquelle 53 ebenfalls parallel an der Zweidrahtleitung 2, wobei jeweils verschiedenpolige Spannungsanschlüsse der Spannungsquelle 13 und der weiteren Spannungsquelle 53 über die Zweidrahtdrahtleitung 2 miteinander in Verbindung stehen. Zusätzlich ist noch sowohl in der Zentralstation 1 als auch in der Unterstation 3 in Reihe mit der steuerbaren Schalteinrichtung 8 bzw. der steuerbaren Schalteinheit 27 jeweils ein zusätzliches Diodenelement 54 bzw. 55 angeordnet, das jedoch für die Funktion des erfindungsgemäßen Datenübertragungssystems keine Bedeutung hat und daher auch entfallen kann.

Zum Senden von Informationssignalen von der Zentralstation 1 zu den Unterstationen wird die steuerbare Schalteinrichtung 8 von der Sende/Empfangs-Steuereinrichtung 4 mit einem dem zu übertragenen Informationssignalen entsprechenden Modulationssignale angesteuert. Entsprechend dem Takt des Modulationssignals wird die Spannungsquelle 13 über die steuerbare Schalteinrichtung 8 an die Zweidrahtleitung 2 geschaltet, so daß ein entsprechend modulierter Strom aus der Spannungsquelle 13 über die Zweidrahtleitung 2 in die Unterstationen fließt. In jeder Unterstation z. B. 3 wird von dem modulierten Strom ein Teilstrom über das weitere Diodenelement 51, die Empfangseinheit 24 und den Strombegrenzungswiderstand 29 abgezweigt. Das weitere Diodenelement 51 verhindert dabei einen Kurzschlußstromfluß aus der weiteren Spannungsquelle 53 in den Eingang 28 der Empfangseinheit 24. Die Empfangseinheit 24 erzeugt an ihrem Ausgang 23 aus dem in ihrem Eingang 28 fließenden modulierten Teilstrom ein entsprechendes Ausgangssignal, das von der Sende/Empfangs-Steuereinheit 20 zur weiteren Auswertung über den Datenbus 21 an die nicht dargestellte Aufbereitungseinheit weitergeleitet wird. Die Übertragung von Informationssignalen von einer der Unterstationen wie z. B. der Unterstation 3 zu der Zentralstation 1 erfolgt entsprechend, wobei die weitere Spannungsquelle 53 über die steuerbare Schalteinheit 27 entsprechend einem von der Sende/Empfangs-Steuereinheit 20 gelieferten Modulationssignale an die Zweidrahtleitung geschaltet wird und ein entsprechender modulierter Strom über die Zweidrahtleitung in den stromempfindlichen Eingang 17 der Empfangseinrichtung 11 in der Zentralstation 1 fließt. Das Diodenelement 50 verhindert einen Stromfluß aus der Spannungsquelle 13 in den stromempfindlichen Eingang 17 der Empfangseinrichtung 11.

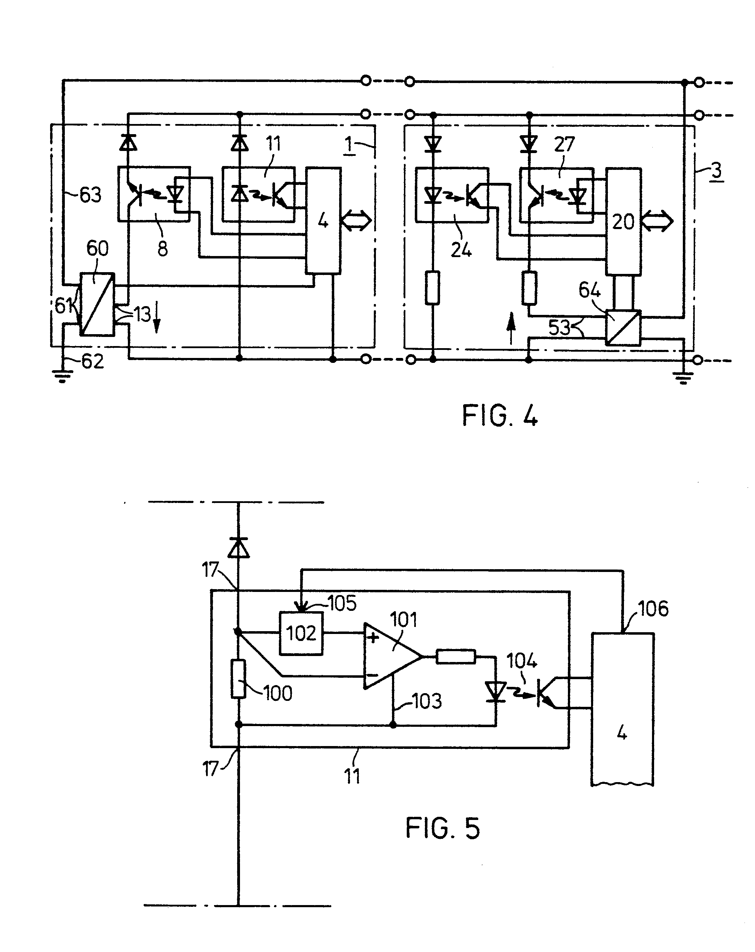

Figur 4 zeigt das Ausführungsbeispiel des erfindungsgemäßen Datenübertragungssystems nach Figur 3 bei Verwendung von Optokopplern als steuerbare Schalteinrichtung 8 und Empfangseinrichtung 11 in der Zentralstation 1 und als steuerbare Schalteinheit 27 und Empfangseinheit 24 in der Unterstation 3. Die Spannungsquelle 13 wird von dem Ausgang eines galvanisch trennenden Netzteiles 60 gebildet, das auch die Stromversorgung für die Sende/Empfangs-Steuereinrichtung 4 der Zentralstation 1 besorgt. Ein weiterer Ausgang 61 des Nezteiles 60 ist über die eine Erdverbindung 62 und eine zusätzliche parallel zu der Zweidrahtleitung 2 geführte Stromversorgungsleitung 63 mit weiteren galvanisch trennenden Neztteilen 64 in den Unterstationen 3 verbunden. Das weitere Netzteil dient jeweils der Stromversorgung der Sende/Empfangs-Steuereinheit 20 in der betreffenden Unterstation 3 und bildet mit einem ausgang die jeweilige weitere Spannungsquelle 53.

Figur 5 zeigt an Stelle eines einfachen Optokopplers ein bevorzugtes Ausführungsbeispiel für Empfangseinrichtung 11 in der Zentralstation 1 des erfindungsgemäßen Datenübertragungssystems. Der Eingang 17 der Empfgseinrichtung 11 wird von den Anschlüssen eines Stromerfassungswiderstandes 100 gebildet. Die Empfangseinrichtung 11 enthält weiterhin eine Subtrahierschaltung 101, deren nicht invertierenden Eingang (+) über ein Abtast-Halte-Glied 102 und deren invertierenden Eingang (-) direkt an einen Anschluß des Stromerfassungswiderstandes 100 geführt sind. Ein Referenzeingang 103 der Subtrahierschaltung 101 ist mit dem anderen Anschluß des Stromerfassungswiderstandes 100 verbunden. Der Subtrahierschaltung 101 ist ausgangsseitig ein Optokoppler 104 nachgeordnet, dessen Ausgang zugleich der Ausgang 10 der Empfangseinrichtung 11 ist. Das Abtast-Halte-Glied 102 weist einen Abtaststeuereingang 105 auf, der mit einem zusätzlichen Steuerausgang 106 der Sende/Empfangs-Steuereinrichtung 4 verbunden ist.

Die Empfangseinrichtung 11 nach Figur 5 gewährleistet auch bei einem Kurzschlußdefekt in der steuerbaren Schalteinheit einer oder mehrerer der Unterstationen einen fehlerfreien Empfang der von einer anderen Unterstation gesendeten Informationssignale. Ein Kurzschluß in der steuerbaren Schalteinheit einer Unterstation hat nämlich zur Folge, daß ein stetiger Kurzschlußgleichstrom aus der weiteren Spannungsquelle über die Zweidrahtleitung und durch die Empfangseinheit der Zentralstation fließt. Zu einem Zeitpunkt, wenn sich weder eine Unterstation noch die Zentralstation im Sendebetrieb befindet, wird der von dem Kurzschlußgleichstrom an dem Stromerfassungwiderstand 100 der Empfangseinrichtung 11 hervorgerufene Spannungsabfall durch Ansteuerung des Abtast-Halte-Gliedes 102 durch die Sende/Empfangs-Steuereinrichtung 4 gespeichert. Beim Senden einer Unterstation wird in der Subtrahierschaltung 101 der gespeicherte Abtastwert von dem nunmehr empfangenen Spannungsabfall des modulierten Stromes mit dem im überlagerten Kurzschlußgleichstrom subtrahiert, so daß am Ausgang des Subtrahiergliedes die übertragenen Informationssignale unbeeinflußt zur Verfügung stehen.

## Ansprüche

1. Datenübertragungssystem zur Übertragung von Informationssignalen auf einer Zweidrahtleitung zwischen einer Zentralstation und mehreren parallel zueinander an der Zweidrahtleitung angeschlossenen Unterstationen, bei dem die Zentralstation eine stromempfindliche Empfangseinrichtung enthält und als Sendeeinrichtung eine steuerbare Schalteinrichtung aufweist, die in Reihe mit einer Spannungsquelle an der Zweidrahtleitung angeschlossen ist, und bei dem jede Unterstation jeweils eine steuerbare Schalteinheit als Sendeeinheit und eine Empfangseinheit aufweist, die eingangsseitig parallel zu der Schalteinheit liegt und gemeinsam mit dieser an der Zweidrahtleitung angeschlossen ist, **dadurch gekennzeichnet,** daß in der Zentralstation (1) in Reihe mit der Empfangseinrichtung (11) und in einem Parallelzweig (14) zu der steuerbaren Schalteinrichtung (8) und der Spannungsquelle (13) eine weitere Spannungsquelle (16) an der Zweidrahtleitung (2) liegt, daß die weitere Spannungsquelle (16) in dem Parallelzweig (14) bezüglich ihrer Polarität entgegengesetzt zu der einen Spannungsquelle (13) liegt und daß in jeder Unterstation die jeweilige Empfangseinheit (24) eingangsseitig an der Zweidrahtleitung (2) über ein Diodenelement (30) angeschlossen ist, dessen Anodenanschluß über die Zweidrahtleitung (2) mit dem positiven Spannungsanschluß der einen Spannungsquelle (13) in Verbindung steht. (Fig. 1 und Fig. 2)

2. Datenübertragungssystem nach Anspruch 1 , **dadurch gekennzeichnet**, daß in dem Parallelzweig (14) in Reihe mit der weiteren Spannungsquelle (16) eine Strombegrenzungseinrichtung (15, 40) angeordnet ist.

3. Datenübertragungssystem nach Anspruch 2, **dadurch gekennzeichnet**, daß die Strombegrenzungseinrichtung - (15) aus einem Widerstand besteht.

4. Datenübertragungssystem nach Anspruch 2, **dadurch gekennzeichnet**, daß die Strombegrenzungseinrichtung - (40) aus einem steuerbaren Schaltglied besteht, dessen Steuereingang (41) im Gegentakt zu der steuerbaren Schalteinrichtung (8) steuerbar ist.

5. Datenübertragungssystem nach einem der vorangehenden Ansprüche, bei dem die Empfangseinrichtung in Reihe mit der steuerbaren Schalteinrichtung an der Zweidrahtleitung liegt, **dadurch gekennzeichnet**, daß parallel zu der Empfangseinrichtung (11) eine Diode (12) liegt, deren Anodenanschluß mit dem positiven Spannungsanschluß der einen Spannungsquelle (13) in Verbindung steht.

6. Datenübertragungssystem zur Übertragung von Informationssignalen auf einer Zweidrahtleitung zwischen einer Zentralstation und mehreren parallel zueinander an der Zweidrahtleitung angeschlossenen Unterstationen, bei dem die Zentralstation eine stromempfindliche Empfangseinrichtung enthält und als Sendeeinrichtung eine steuerbare Schalteinrichtung aufweist, die in Reihe mit einer Spannungsquelle an der Zweidrahtleitung angeschlossen ist, und bei dem jeder Unterstation jeweils eine steuerbare Schalteinheit als Sendeeinheit und eine Empfangseinheit aufweist, die eingangsseitig parallel zu der Schalteinheit liegt und gemeinsam mit dieser an der Zweidrahtleitung angeschlossen ist, **dadurch gekennzeichnet**, daß in der Zentralstation die Empfangseinrichtung (11) eingangsseitig in Reihe mit einem Diodenelement (50) in einem Parallelzweig

(14) zu der steuerbaren Schalteinrichtung (8) und der Spannungsquelle (13) an der Zweidrahtleitung (2) liegt, daß der Anodenanschluß des Diodenelementes (50) mit dem negativen Spannungsanschluß der Spannungsquelle (13) in Verbindung steht, daß in jeder Unterstation (3) in Reihe mit der jeweiligen steuerbaren Schalteinheit (27) jeweils eine weitere Spannungsquelle (53) derart an der Zweidrahtleitung (2) liegt, daß jeweils verschiedenpolige Spannungsanschlüsse der einen Spannungsquelle (13) und der jeweiligen weiteren Spannungsquelle (53) über die Zweidrahtleitung (2) miteinander in Verbindung stehen, und daß in jeder Unterstation (3) die jeweilige Empfangseinheit (24) eingangsseitig an der Zweidrahtleitung (2) über ein weiteres Diodenelement (51) angeschlossen ist, dessen Anodenanschluß über die Zweidrahtleitung (2) mit dem positiven Spannungsanschluß der einen Spannungsquelle (13) in der Zentralstation (1) in Verbindung steht. (Fig. 3 und Fig. 4)

7. Datenübertragungssystem nach einem der vorangehenden Ansprüche, bei dem in der Empfangseinrichtung der Zentralstation und in der Empfangseinheit jeder Unterstation jeweils ein Optokoppler vorhanden ist, **dadurch gekennzeichnet**, daß die Anschlüsse der Leuchtdiode des jeweiligen Optokopplers (11, 24) den Eingang (17, 28) der Empfangseinrichtung (11) bzw. Empfangseinheit (24) bilden.

8. Datenübertragungssystem nach einem der Ansprüche 1 bis 6 , **dadurch gekennzeichnet**, daß die Empfangeinrichtung (11) in der Zentralstation (1) ein Abtast-Halte-Glied - (102) und eine Subtrahierschaltung (101) enthält, die mit einem nichtinvertierenden Eingang ( + ) über das Abtast--Halte-Glied (102) und mit einem invertierenden Eingang (--) direkt an dem Eingang (17) der Empfangseinrichtung - (11) angeschlossen ist. (Fig. 5)

9. Datenübertragungssystem nach einem der vorangehenden Ansprüche, **dadurch gekennzeichnet**, daß in jeder Unterstation (3) an der Zweidrahtleitung (2) eine Reihenschaltung aus einem elektrischen Ventilelement (44) und einem Ladekondensator (45) angeschlossen ist und daß die jeweilige Unterstation (3) mit ihren Stromversorgungsanschlüssen (47) parallel an dem Ladekondensator (45) liegt.

85 P 4003

FIG. 1

FIG. 2

FIG. 3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-3 329 049 (FUJI ELECTRIC) <br> * Insgesamt * | 1,6,7 | H 04 L 5/14 <br> H 04 Q 9/14 |
| A | US-A-4 328 586 (HANSEN) <br> * Spalte 3, Zeile 34 - Spalte 4, Zeile 43; Spalte 5, Zeilen 3-23; Spalte 9, Zeilen 37-59; Spalte 11, Zeile 33 - Spalte 12, Zeile 15; Ansprüche 1-7; Figuren 1-6 * | 1,6,7 | |
| A | WO-A-8 002 631 (DIANTEK) <br> * Ansprüche 1,5-8; Figuren 2-4,9 * | 1,6,7 | |
| A | FR-A-2 509 889 (ASULAB) <br> * Seite 7, Zeile 11 - Seite 9, Zeile 17; Ansprüche 1-3; Figuren 12,4,5 * | 1,6 | |
| | | | RECHERCHIERTE SACHGEBIETE (Int. Cl.4) |
| A | GB-A-2 072 467 (FUJI ELECTRIC) <br> * Ansprüche 1-4; Figuren 1,4 * | 1,6,9 | H 04 L <br> H 04 Q |

Der vorliegende Recherchenbericht wurde für alle Patentansprüche erstellt.

| Recherchenort <br> DEN HAAG | Abschlußdatum der Recherche <br> 14-03-1986 | Prüfer <br> WANZEELE R.J. |
|---|---|---|